# EUROPEAN PATENT SPECIFICATION

(11) **EP 0 595 531 B1**
(45) Date of publication and mention of the grant of the patent: **30.12.1998**
(21) Application number: 93308321.4
(22) Date of filing: 19.10.1993
(51) Int. Cl.: C08L 83/04

(54) **Room temperature vulcanising compositions**
Bei Raumtemperatur vulkanisierende Zusammensetzungen
Compositions vulcanisables à température ambiante

(30) Priority: 27.10.1992 GB 9222593; 09.12.1992 GB 9225674
(43) Date of publication of application: 04.05.1994
(73) Proprietor: DOW CORNING GmbH, D-65091 Wiesbaden (DE)
(72) Inventor: Colas, Andre Rudolf Louis, D-61479 Glashuetten (DE); Joseph, Edward Alexander, D-6238 Hofheim 5 (DE)
(74) Representative: Bullows, Michael

(56) References cited:
- EP-A- 0 010 478
- US-A- 4 562 238
- US-A- 4 633 002

## Description

This invention is concerned with room temperature vulcanising polysiloxane compositions and to silicone moulds made therewith.

It is known to employ room temperature vulcanising compositions for the production of flexible silicone rubber moulds for the manufacture of shaped articles. Suitable materials cure without heat via a condensation reaction which involves crosslinking of hydroxy endblocked polysiloxane chains through siloxane linkages accompanied by release of the corresponding alcohol from an alkoxysilane crosslinking agent in presence of a suitable catalyst. These materials are capable of faithfully reproducing details from a surface onto which they are applied to produce the mould.

Thus, the details of wood grain, wood carving, fabrics and the like can be duplicated from a so-called "master" with great accuracy without causing damage to the original positive. Also the flexible mould makes it easier to separate the mould from the moulded or cast part. The flexible moulds also permit complicated or irregularly shaped parts to be moulded in a single moulding operation, because the flexible mould can be bent out of shape during the removal of the moulded part. The mould being flexible will often return to its original shape for further moulding processes. Although the flexible moulds have many desirable features, one disadvantage in using them is that the flexible mould is limited in the number of moulded parts which can be produced from a single mould. It is therefore a practice to make ancther mould or moulds from the same master to produce a desired quantity of replicas.

Release of the cured silicone rubber mould from a master, made of certain epoxy resin based compounds for example, tends to become more difficult as the number of silicone rubber moulds made from the same master increases until eventually a silicone rubber mould cannot be released from the master. This is very undesirable because the master must be disposed oL and a new, costly, master prepared.

EPA 10,478 teaches mold making compounds which comprise a dihydroxydiorganopolysiloxane oil, a crosslinking agent comprising an alkoxysilane and a tin catalyst. These compounds require the addition of a second low molecular weight dihydoxypolysiloxane oil and they do not release well from the molds because of the silane-catalyst mixtures used.

US patent 4,633,003 teaches amino-functional polysiloxane compounds and methods for their manufacture. The compounds are made by reacting a hydroxy terminated organopolysiloxane, a silane and a tin catalyst. These compounds require the presence of an amino group on the silane and they must be vulcanised at elevated temperatures.

It is one object of the present invention to provide a mould making compound which has an improved capability of release from an epoxy master.

Surprisingly, we have now found that this object may be achieved by use of a room temperature vulcanisable composition formed by mixing a composition comprising, inter alia, a diorganopolysiloxane having terminal silicon-bonded hydroxyl groups, a crosslinking agent and a condensation catalyst in which the crcsslinking agent comprises a tri- or tetra- alkoxy silane or siloxane in which the alkoxy groups contain more than two carbon atoms.

The invention provides in one of its aspects a room temperature vulcanisable composition formed by mixing components consisting essentially of (1) a diorganopolysiloxane having terminal silicon-bonded hydroxyl groups, (2) a crosslinking agent comprising a trialkoxysilane, a trialkoxysiloxane, a tetraalkoxysilane or tetraalkoxysiloxane wherein the alkoxy groups contain more than two carbon atoms, (3) a condensation catalyst and (4) a trialkylsilyl terminated diorganopolysiloxane, as defined in present claim 1.

A room temperature vulcanisable composition according to the invention is preferably formed in two separate parts ready for mixing together before use.

A mould may be prepared by mixing in the desired proportions the contents of the hereinabove specified parts and applying it to a body to be duplicated, curing the composition and removing it from the body.

Hydroxyl-terminated diorganopolysiloxanes which are employed as component (1) of the preparations of this invention are well-known materials and may be any of those known to be suitable for use in the formulation of two-package, room temperature vulcanising compositions. Such materials may be described as substantially linear diorganopolysiloxanes containing two, or approximately two, terminal silanol (-SiOH) groups per molecule.

The silicon-bonded groups present in the diorganopolysiloxane (1) are selected from monovalent hydrocarbon groups, monovalent halogenated hydrocarbon groups and cyanoalkyl radicals. Examples of the organic radicals which may be present are alkyl radicals such as methyl, ethyl, propyl, butyl, dodecyl or octadecyl radicals, alkenyl radicals such as vinyl, allyl and cyclohexenyl, aryl radicals such as phenyl and naphthyl and halogenated hydrocabon radicals such as chlorophenyl, bromomethyl and trifluoropropyl radicals.

The hydroxyl terminated diorganopolysiloxanes may vary in viscosity within the range from 500 to 60,000 cSt (mm²/s) at 25°C. Most preferred hydroxyl terminated diorganopolysiloxanes are of the formula HO-[-Me₂SiO-]ₘ-H wherein Me represents the methyl radical and m has a value such that the viscosity of the diorganopolysiloxane lies within the range from 500 to 60,000 cSt at 25°C.

The crosslinking agents (2) of a composition according to the invention are tri- or tetra- alkoxy silanes or siloxanes. We have discovered that tri- or tetra- alkoxy silanes or siloxanes in which the alkoxy group contains more than 2 carbon atoms achieve better release from epoxy moldings than tri- or tetra- alkoxy silanes or siloxanes in which the alkoxy group contains 1 or 2 carbon atoms. Thus, the crosslinking agents of the present invention which contain groups such as propoxy or butoxy show better release than crosslinking agents which have methoxy or ethoxy groups.

The trialkoxysilanes or siloxanes have their remaining non-alkoxy valencies satisfied by aryl or alkyl groups. Exemplary tetralkoxysilanes include tetrapropoxysilane and tetrabutoxysilane. The proportion of crosslinking agent employed lies in the range from 6 to 50 moles per mole of polysiloxane (1).

As the condensation catalyst (3) there may be employed one or more of organic acids, bases and metal salts of carboxylic acids. Such materials and their use as catalysts in two-package cold-curable systems are well-known and the choice of the most suitable catalysts for a particular formulation or application will be readily apparent to those skilled in the art. The preferred catalysts are the metal salts of carboxylic acids, for example zinc naphthenate, lead octoate, stannous acetate, dibutyltin dilaurate, dibutyltin diacetate and dioctyltin diacetate, the most preferred of these being the organo tin salts, and more specifically dialkyl tin salts. If desired more than one type of condensation catalyst may be present as component (3). The proportion of catalyst is comparatively high and lies in the range from 1.0 to 8.0 moles per mole of polysiloxane (1).

Component (4) of the composition of this invention is a trialkylsilyl diorganopolysiloxane. This component serves as a diluent for the composition and also assists mould release properties. These materials are well-known in the art. They are present in a proportion of 50 to 200 parts by weight per 100 parts by weight of component (1).

The silicon-bonded groups in the diorganopolysiloxane (4) may be selected from monovalent hydrocarbon radicals, monovalent halogenated hydrocarbon radicals and cyanoalkyl radicals as specified in respect of the hydroxylated diorganopolysiloxane (1) and as hereinbefore exemplified. Preferably the organic radicals are selected from methyl, phenyl, vinyl and trifluoropropyl radicals, at least about 50 percent of the radicals being methyl radicals. The polydiorganosiloxanes (4) may vary in viscosity from freely-flowing liquids having a viscosity of less than 10 cSt to highly-viscous materials. Preferably they are chosen from the lower end of the viscosity scale, that is from about 20 to 4000 cSt.

In addition to the specified components (1), (2), (3) and (4) the compositions of this invention may contain finely divided fillers and other additives, for example heat stability additives, dyes, plasticisers and pigments. Any of a wide variety of inert organic and inorganic filler materials may be employed including for example diatomaceous earths, crushed quartz, calcium carbonate, titania, zirconium silicate and ferric oxide. When a filler is present at least a major proportion of it is preferably packaged in admixture with the polydiorganosiloxane (1).

A composition according to the invention is preferably in two separate parts for admixture to provide a room temperature vulcanising composition. Generally, one of the two parts (the curing agent) will contain the crosslinking agent (2) and the catalyst (3).

The curing agent composition comprising (2) and (3) is sensitive to water, particularly when a highly active catalyst such as stannous octoate is present therein. It is therefore preferably prepared and maintained in a substantially anhydrous condition if it is to be stored for a significant time prior to use.

The preparations of this invention may be employed in any of the wide variety of applications known for the room temperature curing organosiloxane compositions, for example as coating, caulking and insulating materials, and in the preparation of flexible moulds.

The following examples in which the parts are expressed as parts by weight illustrate the invention.

### Example 1

100 parts by weight of a base component (hereinafter called RTV base 1) of a room temperature vulcanisable (RTV) composition formed from 100 parts (1 x 10⁻³ moles) of an alpha, omega dihydroxypolydimethylsiloxane having a viscosity of 50,000 cSt, 198 parts of a trimethylsilyl endcapped polydimethylsiloxane having a viscosity of 50 to 350 cSt and 100 parts of finely divided mineral filler were mixed with 5 parts by weight of a curing agent component of the RTV comprising a tri- or tetra- alkoxysilane and dibutyltindilaurate as shown in Table 1. The composition of the curing agent part was varied as shown in Table 1, both with regard to the type and amount of silane crosslinker, and also with regard to the amount of dibutyltindilaurate.

The silane crosslinkers used and listed in Table 1 have the following formulae:

| | | |
|---|---|---|
| PTM | (comparative) refers to phenyltrimethoxysilane | C₆H₅Si(OCH₃)₃ |
| TEOS | refers to tetraethoxysilane | Si(OC₂H₅)₄ |
| EPS | (comparative) refers to a silane mixture consisting of 30 weight % TEOS and 70 weight % ethylpolysilicate | OC₂H₅ C₂H₅O(SiO)ₙC₂H₅ OC₂H₅ |
| nPOS | refers to tetrapropoxysilane | Si(OC₃H₇)₄ and |
| TBOS | refers to tetra-n-butoxysilane | Si(OC₄H₉)₄ |

For the release trials a series of master mouldings were prepared from commercially available epoxy resin (Sikagard® 63, two-component green epoxy resin manufactured by Sika Inertol). The epoxy master moulding had a shape as shown in Figure 1 and a length of 6 to 8cm, a width of 5cm and four parallel grooves (10) 0.5cm deep extending lengthwise of the master formed in an upper surface (12) of the master.

When mixed, each RTV base catalysed with a given curing agent composition, was cast onto four of the epoxy resin masters. The silicone elastomer was cast on top to totally cover the master and fill all of its grooves and to a depth of 5mm above the upper surface (12). The castings of RTV so formed were cured at room temperature for 24 hours to provide cured silicone rubber layers approximately 5mm thick minimum. Each silicone rubber casting was stripped from its master by hand. The preparation of silicone rubber castings in this way was repeated seriatim using freshly mixed composition of the same formulation for each master to provide series of silicone rubber castings using each curing agent part. The average number of silicone rubber releases made with a given RTV curing agent composition before adhesion to the master was seen is recorded in Table 1. For cases where no adhesion was seen the evaluation was stopped after 40 silicone rubber releases had been made on each master.

**TABLE 1**

| Number of Releases obtained with a given RTV curing agent Composition and RTV Base 1 | | | |
|---|---|---|---|
| Crosslinker | Tin Catalyst | | |
| Name (Functionality) | Amount | Amount | Releases |
| PTM (comparative) | 8.0 | 0.222 | 3 |
| (-OCH₃) | 8.0 | 0.317 | 4 |
| EPS (comparative) | 9.8 | 0.317 | 4 |
| OC₂H₅) | 9.8 | 1.257 | 24 |
| nPOS | 6.4 | 1.257 | 40 |
| (-OC₃H₇) | 7.1 | 0.317 | 14 |
| | 7.1 | 0.633 | 20 |
| | 9.8 | 0.633 | 8 |
| | 9.8 | 0.950 | 20 |
| TBOS | 6.4 | 0.950 | 40 |
| (-OC₄H₉) | 6.4 | 1.257 | 40 |
| | 9.8 | 0.950 | 28 |
| | 9.8 | 1.257 | 37 |
| Note: amounts refer to g-moles of given component per 100g of the RTV base | | | |

As can be seen from the Examples increasingly better release is obtained as the leaving groups functionality in the crosslinker progresses from the lower chain homologues, methoxy and ethoxy, to propoxy and butoxy. The proportion of crosslinker, and particularly the proportion of condensation catalyst used, in this case dibutyltindilaurate, also play a role. Thus, best release is obtained when a) the leaving group in the crosslinker is a higher molecular weight alcohol, b) the amount of condensation cure catalyst is high, and c) the concentration of crosslinker is small.

## Claims

1. A room temperature vulcanisable composition formed by mixing components consisting essentially of (1) a diorganopolysiloxane having terminal silicon-bonded hydroxyl groups and the remainder of the silicon bonded groups are selected from monovalent hydrocarbon groups, monovalent halogenated hydrocarbon groups and cyanoalkyl groups, said diorganopolysiloxane (1) having a viscosity of in the range of 500 to 60,000 mm²/s at 25°C, (2) 6 to 50 moles of a crosslinking agent per mole of diorganopolysiloxane (1), said crosslinking agent comprising a trialkoxysilane, a trialkoxysiloxane, a tetraalkoxysilane or a tetraalkoxysiloxane, wherein the remaining valencies of the trialkoxysilane or trialkoxysiloxane are satisfied with an alkyl or an aryl, (3) 1 to 8 moles of a condensation catalyst per mole diorganopolysiloxane (1), (4) a trialkylsilyl terminated diorganopolysiloxane in an amount of from 50 to 200 parts by weight per 100 parts diorganopolysiloxane (1), and (5) optional components selected from the group consisting of fillers, heat stability additives, dyes, plasticizers and pigments, characterised in that the alkoxygroups of the crosslinking agent (2) contain more than two carbon atoms.

2. A room temperature vulcanising composition according to Claim 1 further characterised in that the composition is formd in two separate parts ready for mixing together before use.

3. A composition according to either Claim 1 or Claim 2 further characterised in that the the crosslinking agent comprises tetrapropoxysilane or tetra-n-butoxysilane.

4. A composition according to any one of the preceding claims further characterised in that the condensation catalyst comprises a dialkyl tin salt of a carboxylic acid.

5. A composition as claimed in any one of the preceding claims further characterised in that the polydiorganosiloxane (4) has a viscosity within the range from 20 to 4,000 mm²/s at 25°C.

6. A composition as claimed in any one of the preceding claims which also contains a filler, at least a major proportion of the said filler being present in admixture with the diorganopolysiloxane (1).

## Patentansprüche

1. Bei Raumtemperatur vulkanisierbare Zusammensetzung hergestellt durch Vermischen von Komponenten, die im wesentlichen aus (1) einem Diorganopolysiloxan mit terminalen siliciumgebundenen Hydroxylgruppen, wobei der Rest der siliciumgebundenen Gruppen aus einwertigen Kohlenwasserstoffgruppen, einwertigen halogenierten Kohlenwasserstoffgruppen und Cyanoalkylgruppen ausgewählt ist und das Diorganopolysiloxan (1) eine Viskosität im Bereich von 500 bis 60.000 mm²/s bei 25°C aufweist, (2) 6 bis 50 Mol eines Vemetzungsmittels pro Mol Diorganopolysiloxan (1), wobei das Vernetzungsmittel ein Trialkoxysilan, ein Trialkoxysiloxan, ein Tetraalkoxysilan oder ein Tetraalkoxysiloxan umfaßt, wobei die restlichen Valenzen des Trialkoxysilans oder Tnalkoxysiloxans mit einem Alkyl oder Arylrest abgesättigt sind, (3) 1 bis 8 Mol eines Kondensationskatalysators pro Mol Diorganopolysiloxan (1), (4) einem Diorganopolysiloxan mit endständiger Trialkylsilylgruppe in einer Menge von 50 bis 200 Gew.-Teilen pro 100 Gew.-Teile Diorganopolysiloxan (1) und (5) optionalen Komponenten, die unter Füllstoffen, Wärmestabilitätsadditiven, Farbstoffen, Plastifizierungsmitteln und Pigmenten ausgewählt sind, bestehen, dadurch gekennzeichnet, daß die Alkoxygruppen des Vemetzungsmittels (2) mehr als zwei Kohlenstoffatome enthalten.

2. Bei Raumtemperatur vulkanisierbare Zusammensetzung nach Anspruch 1, die des weiteren dadurch gekennzeichnet ist, daß die Zusammensetzung in zwei getrennten Teilen ausgebildet ist, die vor Verwendung miteinander gemischt werden können.

3. Zusammensetzung nach Anspruch 1 oder Anspruch 2, die des weiteren dadurch gekennzeichnet ist, daß das Vernetzungsmittel Tetrapropoxysilan oder Tetra-n-butoxysilan umfaßt.

4. Zusammensetzung nach einem der vorhergehenden Ansprüche, die des weiteren dadurch gekennzeichnet ist, daß der Kondensationskatalysator ein Dialkylzinnsalz einer Carbonsäure enthält.

5. Zusammensetzung nach einem der vorhergehenden Ansprüche, die des weiteren dadurch gekennzeichnet ist, daß das Polydiorganosiloxan (4) eine Viskosität im Bereich von 20 bis 4000 mm²/s bei 25°C aufweist.

6. Zusammensetzung nach einem der vorhergehenden Ansprüche, die femer einen Füllstoff enthält, wobei mindestens ein Hauptteil des Füllstoff im Gemisch mit dem Diorganopolysiloxan (1) vorhanden ist.

## Revendications

1. Une composition vulcanisable à la température ambiante, formée en mélangeant des ingrédients qui consistent essentiellement en (1) un diorganopolysiloxane ayant des groupes hydroxyle terminaux liés au silicium et dont les autres groupes liés au silicium sont choisis parmi les groupes hydrocarbonés monovalents, les groupes hydrocarbonés halogénés monovalents et les groupes cyanoalkyles, ledit diorganopolysiloxane (1) ayant une viscosité comprise dans l'intervalle de 500 à 60 000 mm²/s à 25°C, (2) 6 à 50 moles d'un agent de réticulation par mole de diorganopolysiloxane (1), ledit agent de réticulation comprenant un trialcoxysilane, un trialcoxysiloxane, un tétraalcoxysilane ou un tétraalcoxysiloxane, les valeurs restantes du trialcoxysilane ou du trialcoxysiloxane étant satisfaites par un radical alkyle ou un radical aryle, (3) 1 à 8 moles d'un catalyseur de condensation par mole de diorganopolysiloxane (1), (4) un diorganopolysiloxane terminé par des groupes trialkylsilyles en une quantité de 50 à 200 parties en poids pour 100 parties de diorganopolysiloxane (1), et (5) des composants facultatifs choisis dans la classe formée par des charges, des additifs de stabilité thermique, des colorants, des plastifiants et des pigments, caractérisée en ce que les groupes alcoxy de l'agent de réticulation (2) contiennent plus de deux atomes de carbone.

2. Une composition vulcanisable à la température ambiante selon la revendication 1, caractérisée de plus en ce que la composition est formée de deux composants séparés prêts à être mélangés ensemble avant l'emploi.

3. Une composition selon la revendication 1 ou la revendication 2, caractérisée de plus en ce que l'agent de réticulation comprend du tétrapropoxysilane ou du tétra-*n*-butoxysilane.

4. Une composition selon l'une quelconque des revendications précédentes, caractérisée de plus en ce que le catalyseur de condensation comprend un sel de dialkylétain d'un acide carboxylique.

5. Une composition telle que revendiquée dans l'une quelconque des revendications précédentes, caractérisée de plus en ce que le polydiorganosiloxane (4) a une viscosité comprise dans l'intervalle de 20 à 4000 mm²/s à 25°C.

6. Une composition telle que revendiquée dans l'une quelconque des revendications précédentes, qui contient aussi une charge, une proportion au moins prépondérante de ladite charge étant présente en mélange avec le diorganopolysiloxane (1).
